Europäisches Patentamt

(19) European Patent Office

Office européen des brevets

(11) Publication number: **0 079 662**
**B1**

(12) **EUROPEAN PATENT SPECIFICATION**

(45) Date of publication of patent specification: **19.03.86**

(21) Application number: **82201448.6**

(22) Date of filing: **16.11.82**

(51) Int. Cl.⁴: **A 01 B 33/06, A 01 B 33/12**

(54) **Soil cultivating implements.**

(30) Priority: **17.11.81 NL 8105197**

(43) Date of publication of application:
**25.05.83 Bulletin 83/21**

(45) Publication of the grant of the patent:
**19.03.86 Bulletin 86/12**

(84) Designated Contracting States:
**DE FR GB**

(56) References cited:
**DE-A-2 708 432**
**NL-A-7 116 820**
**NL-A-7 402 788**
**NL-A-7 411 643**
**NL-A-7 510 308**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

EP 0 079 662 B1

# Description

This invention relates to soil cultivating implements comprising an elongate frame portion that is movable over the ground and that extends horizontally or substantially horizontally perpendicular or at least transverse to the intended direction of operative travel of the implement, the frame portion carrying a plurality of rotary soil working members that are rotatable about upwardly extending axes and each of which has at least one soil working tool, a single supporting member being provided which supports the implement from the ground surface, when it is in operation, at a position in advance of the rotary soil working members relative to said direction of travel, the said member being pivotable about a horizontal and transverse axis, which is located excentrically and above the whole part of the supporting member that bears upon the ground surface, being also upwardly and downwardly adjustable in level relative to that of the soil working members and abutting normally against a first stop, which limits its rearward displacement.

The term "implement or machine" is shortened throughout the remainder of this document to "implement" alone for the sake of brevity.

An implement of the kind set forth is known from the Dutch patent specification 71 16820. With the known construction the implement includes a tubular supporting member which by upward or downward adjustment in level relative to that of the soil working members, principally determines the maximum depth to which the soil working tools of the implement can penetrate into the ground when the implement is in use.

Springs are employed to maintain this tubular supporting member in its appointed position, but the use of springs entails the provision of precautionary mechanisms that exert a significant increasing effect upon the cost of the implement. Accordingly an object of the present invention is to provide a soil cultivating implement of the kind set forth above in which the supporting member is attached to the remainder of the implement in a simple and compact manner that does not sacrifice any effectiveness, as compared with the known implements which have just been discussed, whilst not unnecessarily increasing the cost of the implement. Accordingly there is provided a soil cultivating implement of the kind set forth, characterized in that the supporting member is freely pivotable about its axis which is located in advance, with respect to the intended direction of operative travel of the implement, of the whole part of the supporting member that bears upon the ground surface when the implement is in use and a further stop is provided that limits the angular extent of the forward deflection of the supporting member, when said supporting member encounters an obstacle, providing once the obstacle is passed, an automatic return of the supporting member against the first stop, due to the continuing forward travel of the implement.

By virtue of the location of the pivotal axis, which will normally be parallel or substantially parallel to the ground surface, relative to that of the part of the supporting member which actually bears against the ground surface when the implement is in use and the presence of said further stop that limits the angularly forward deflection of the supporting member that is possible, the precautionary mechanisms required in the known implement that employs springs are rendered unnecessary. The supporting member occupies a stable supporting position when the implement is in use but, in the event of a large stone or other hard object becoming momentarily jammed between at least one of the rotary soil working members and the rear of the supporting member, that supporting member can yield forwardly, about the pivotal axis, to prevent damage and allow the stone or other hard object to be quickly released. Due to the position of the pivotal axis and the fact that the deflection of the supporting member is limited to a certain extent, immediately following the release, the supporting member will return rapidly and automatically to its optimum supporting position as a result of the continuing forward travel of the implement.

In a convenient form, the supporting member may be afforded by a shaded plate having a convex surface that is foremost with respect to the intended direction of operative travel of the implement. In another convenient form the supporting member may be afforded by a roller which is freely rotatable about an axis that extends substantially horizontally parallel to the frame portion of the implement when the latter is in use.

For a better understanding of the invention, and to show how the same may be carried into effect, reference will now be made, by way of example, to the accompanying drawings, in which:—

FIGURE 1 is a somewhat diagrammatic plan view of a soil cultivating implement in accordance with the invention shown connected to the rear of an agricultural tractor,

FIGURE 2 is a section, to an enlarged scale, taken on the line II—II in Figure 1,

FIGURE 3 is a partial plan view as seen in the direction indicated by an arrow III in Figure 2,

FIGURE 4 is a side elevation, to the same scale as Figures 2 and 3, showing an alternative form of soil cultivating implement in accordance with the invention, and

FIGURE 5 is a partial plan view as seen in the direction indicated by an arrow V in Figure 4.

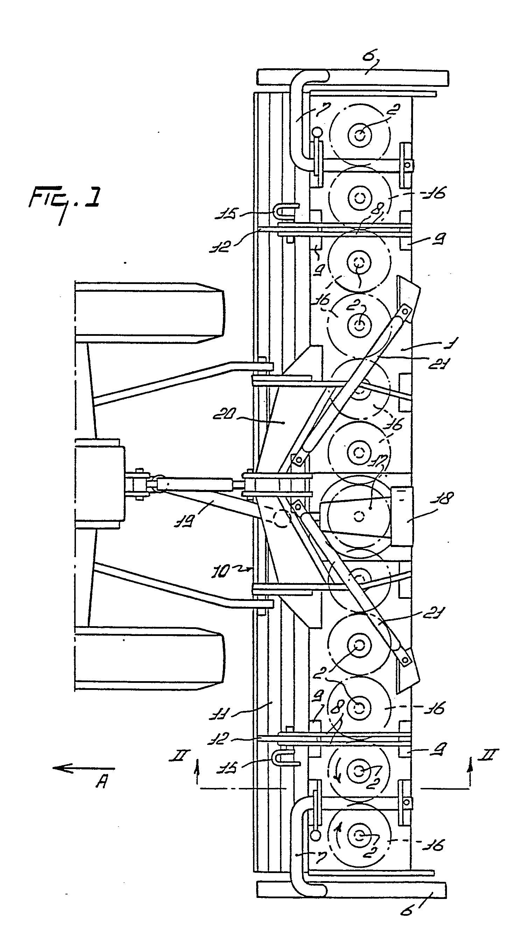

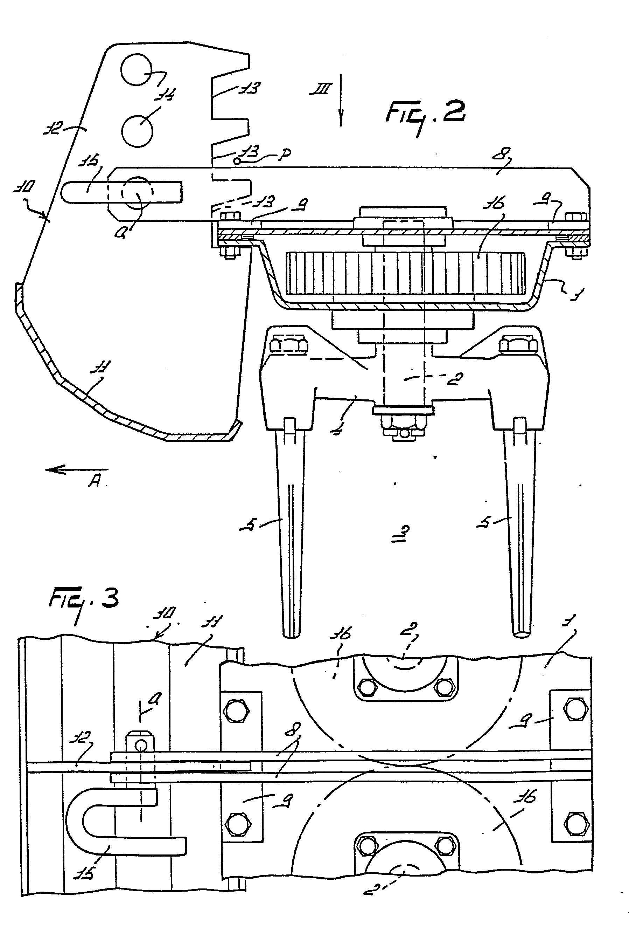

Referring to Figures 1 to 3 of the drawings, the soil cultivating implement that is illustrated therein is in the form of a rotary harrow and comprises a hollow box-section frame portion 1 of elongate configuration that extends (on horizontal land) horizontally, or substantially horizontally, perpendicular (as illustrated), or at least transverse, to the intended direction of operative travel of the implement which is indicated in Figures 1, 2 and 4 of the drawings by an arrow A. A plurality, of which there are twelve in the example that is being described, of upwardly extending shafts 2 are rotatably journalled in bearings carried by the upper and lower walls of the hollow frame portion 1 so as to lie in a single row that is parallel to the transverse length of the frame portion 1 itself. Preferably, but not essentially, the longitudinal axis (axis of rotation) of each shaft 2 is spaced from that of the or each of its immediate neighbour by a distance of substantially 25 cm. Each shaft 2 will normally, as illustrated, be vertically or substantially vertically disposed when the implement is in operation. A lower region of each shaft 2 that projects downwardly from beneath the bottom of the hollow frame portion 1 carries a corresponding rotary soil working member 3 (Figure 2), each soil working member 3 comprising a substantially horizontal carrier 4 firmly, but releasably, secured to the corresponding shaft 2, and two diametrically opposed soil working tools in the form of rigid tines 5 having upper fastening portions releasably engaged in sleeves at the outer ends of the carrier 4 and downwardly projecting soil working portions that project into, and break up, the soil when the implement is in use. The distance between the soil working portions of the two tines 5 of each rotary soil working member 3 is a little greater than is the distance between the axes of rotation of immediately neighbouring shafts 2 so that, when the implement is in operation, the twelve, in this example, members 3 will work individual strips of land, extending in the direction A, that overlap one another to produce a single broad strip of worked soil having a width of substantially, but not necessarily exactly, 3 m in the case of the example that is illustrated having the advantageous spacing between the axes of rotation of the shafts 2 that is mentioned above. It is emphasised that the soil working members 3 could be of different constructions and, in particular, that the soil working tools could be of other forms than the rigid tines 5 which can be seen best in Figures 2 and 4 of the drawings, there being, if desired, only a single soil working tool or more than two thereof per soil working member 3.

The opposite ends of the hollow, elongate frame portion 1 are closed by substantially vertical side plates that extend substantially vertically parallel to one another and to the direction A. Immediately beyond each of these side plates, there is a corresponding substantially vertically disposed side plate 6 which extends parallel to the immediately neighbouring frame portion side plate concerned and to the direction A. The side plates 6 co-operate with the tines 5 of the immediately neighbouring soil working members 3 in working the soil at the margins of the broad strip thereof that is produced by the implement in substantially the same thorough manner as is accomplished by the co-operation of neighbouring pairs of soil working members 3 at locations closer to the centre of the implement. Each side plate 6 is carried by a corresponding single arm 7, each arm 7 having a portion which extends substantially horizontally parallel to the direction A at a loca-

tion above the hollow frame portion 1 and at a short distance from the associated end of that frame portion. The portion of each arm 7 that has just been mentioned is turnably mounted in two brackets carried by the top of the hollow frame portion 1 and can thus pivot about an axis coinciding with the longitudinal axis of the portion concerned. The lower edges of the side plates 6 are arranged to slide over the ground in the direction A and the pivotal mounting of each arm 7 enables the side plates 6 to turn upwardly and downwardly, as may be required, to match undulations in the surface of the ground that may be met with during travel in the direction A.

At two locations on top of the hollow frame portion 1 that are respectively mid-way between the axes of rotation of the second and third rotary soil working members 3 counting inwardly from the opposite end of the single row of such members 3, there are two pairs of strips 8 that all extend substantially horizontally parallel to the direction A with a narrow spacing between the two strips 8 of each pair. The lower edges of the strips 8 are fastened to the top of the hollow frame portion 1, at the front and rear edges thereof, by horizontal plates 9 which are bolted to the front and rear edge portions of the frame portion 1. The rear ends, with respect to the direction A, of the substantially vertically disposed strips 8 register with the rearmost extremity of the hollow frame portion 1 whereas the leading ends of the strips project forwardly in the direction A beyond the foremost extremity of the hollow frame portion 1 by a distance which is substantially one-third of the width of the hollow frame portion 1, measured in the direction A, this width being substantially 30 cm in the case of the example that is being described so that each strip 8 thus projects forwardly beyond the hollow frame portion 1 by a distance of substantially 10 cm.

The strips 8 enable a supporting member of the implement, that is generally indicated by the reference 10, to be located in advance of the frame portion 1, and of the soil working members 3, with respect to the direction A. Part of the supporting member 10 bears against the ground surface whilst the implement is in operation and, since said supporting member is upwardly and downwardly adjustable in position relative to the remainder of the implement in a manner which will be described below, the position of the supporting member 10 is the factor which principally governs the effective working depth of the implement, that is to say, the depth to which the tines 5 of the soil working members 3 can penetrate into the ground when the implement is in use. The supporting member 10 comprises an elongate plate 11 that extends throughout substantially the whole of the combined working width of the twelve soil working members 3 (see Figure 1). The plate 11, although not actually being curved, presents a plurality of successively relatively inclined flat surfaces whose inclinations to one another are so small as to give said plate an effectively curved configuration whose leading outer surface, with respect to the direction A, is convex (see Figure 2). In fact, the plate 11 has five parallel fold lines that all extend substantially horizontally parallel to the row of soil working members 3, the rearmost of said fold lines constituting a transition between a steeply upwardly inclined rearmost edge region of the plate and a part of that plate which is substantially horizontally disposed for engagement with the ground surface when the implement is in use. The leading edge, with respect to the direction A, of the substantially horizontal part of the plate 11 which had just been mentioned, merges, by way of a second one of the fold lines, into an upwardly and forwardly inclined plate portion and third, fourth and fifth fold lines integrally merge these successive flat plate portions into neighbouring forwardly and upwardly inclined plate portions, all four of these non-horizontally disposed plate portions being of equal width except for the last and uppermost portion which is smaller in width than all of the others and which will normally be vertically or substantially vertically disposed.

As seen in Figure 2 of the drawings, a circle could be drawn against which each of the flat portions (except the upwardly and rearwardly inclined rearmost edge) of the plate 11 would touch in a chord-like relationship. The centre of this circle is at a point P (Figure 2) which is located immediately above the upper edge of the strip 8 that can be seen in Figure 2 and vertically above, or substantially vertically above, a leading one of the horizontal fastening plates 9. The portions of the plates 11 that are in chord-like relationship with the imaginary circle that has just been mentioned subtend an angle of substantially 60° at the point P but the plate 11 could be shaped so as to subtend a larger angle of up to substantially 90° at this point.

The supporting member 10 has two substantially vertically disposed carrier plates 12 each of which is arranged between a corresponding pair of the strips 8 and each of which has a lower edge whose shape enables it to be fixedly secured to the concave inner surface of the plate 11 throughout the width, as seen in Figure 2 of the drawings, of that concave surface. A leading edge of each carrier plate 12, above the plate 11, is straight but is inclined steeply upwardly and rearwardly, with respect to the direction A, from the upper free edge of the plate 11. Each carrier plate 12 also has a lower free edge which is straight and which is inclined upwardly and rearwardly, with respect to the direction A from the plate 11 at a very small inclination to the vertical which is less than the inclination of the upper leading free edge of the same plate 12. Each carrier plate 12 also has an upper rear edge which commences at a horizontal level approximately midway between the lowermost and uppermost extremities of the plate concerned, said upper rear edge being substantially vertical in the normal undeflected position of use of the supporting member 10 that is illustrated in Figure 2, but said edge is formed with three substantially identical recesses 13 that lie one above the other in closely spaced apart relationship. Each recess 13 has a straight and substantially horizontal lower edge, an adjoining straight and substantially vertical leading, with respect to the direction A, edge and a straight upper edge which extends upwardly and rearwardly, with respect to the direction A, from the upper end of the leading edge at an angle of substantially 12° to the horizontal. This 12° inclination to the horizontal is not critical and a larger inclination of, for example, substantially 15°, would be equally acceptable. Three circular holes 14 are formed through each carrier plate 12 and lie substantially vertically one above the other at horizontal levels substantially corresponding to those of the upper inclined edges of the three recesses 13, respectively, said holes 14 being spaced forwardly, with respect to the direction A, from the recesses 13 to lie at locations which are somewhat closer to the upper leading edge of each plate 12 than they are to the upper rear edge thereof. Each pair of strips 8 is formed, in the leading ends of the two strips, with a substantially horizontally aligned pair of holes of substantially the same size as the holes 14 and a substantially horizontal locking pin 15 (Figure 3) which includes a conventional retaining pin can be entered through the two holes in each pair of strips 8 and through a chosen one of the three holes 14 in the carrier plate 12 that is sandwiched between those strips 8 to retain the supporting member 10 displaceably at a corresponding one of three different levels relative to the frame portion 1 and the soil working members 3.

The supporting member 10 is turnable, as a whole, about a substantially horizontal axis $a$ that coincides with the longitudinal axes of the two locking pins 15 and with the centres of the two chosen holes 14 in the two carrier plates 12. Whichever hole 14 in each carrier plate 12 is chosen for co-operation with the corresponding locking pin 15, a corresponding one of the three recesses 14 in the upper rear edge of the same plate 12 will co-operate with a leading, with respect to the direction A, rim of the frame portion 1. In particular, the lower straight edge of the recess 13 concerned will normally bear against the lower surface of said rim as illustrated in Figure 2 of the drawings since, when the implement is moving operatively in the direction A, the whole supporting member 10 will tend to be turned in an anti-clockwise direction (as seen in Figure 2) about the axis $a$ by virtue of the contact between the lowermost substantially horizontal part of the elongate plate 11 and the surface of the ground.

Each rotary shaft 2 is provided, inside the hollow frame portion 1, with a corresponding straight-toothed or spur-toothed pinion 16, the twelve (in this embodiment) pinions 16 being of such sizes that each of them has its teeth in mesh with those of the or each of its immediate neighbours. With this arrangement, each pinion 16 will rotate, together with the corresponding shaft 2 and soil working member 3, in the opposite direction to the or each immediately neighbouring similar assembly as indicated by small arrows for two such immediately neighbouring assemblies in Figure 1 of the drawings. One of the centre pair of shafts 2 in the single row thereof has an upward extension through the top of the hollow frame portion 1 into a gearbox 17 that is secured in position on top of the frame portion 1. Bevel pinions and substantially horizontal shafts within the gearbox 17 place this extension of one of the shafts 2 in driven connection with a rotary input shaft of the gearbox 17 that projects forwardly from the front thereof in substantially the direction A, said input shaft being splined or otherwise keyed. A change-speed gear 18 is provided at the rear of the gearbox 17, with respect to the direction A, and includes means by which the transmission ratio between the rotary input shaft of the gearbox 17 and the upwardly extended shaft 2 can be changed. The change-speed gear 18 may be of a construction which is known *per se* and will not be described in detail. It enables the speed of rotation of the soil working member 3 to be increased or decreased, as may be desired, without needing to alter the speed of rotation that is applied to the rotary input shaft of the gearbox 17. A telescopic transmission shaft 19 which is of a construction that is known *per se,* having universal joints at its opposite ends, is employed to place the rotary input shaft of the gearbox 17 in driven connection with the rear power take-off shaft of an agricultural tractor or other operating vehicle in the manner shown somewhat diagrammatically in Figure 1 of the of the drawings. A central region of the top of the hollow frame portion 1 is provided, at the front, with a coupling member or trestle 20 which is of substantially triangular configuration as seen in front or rear elevation. The coupling member or trestle 20 is constructed to cooperate with a rear-mounted three-point lifting device or hitch of the agricultural tractor or other vehicle which moves and operates the implement. Downwardly and rearwardly divergent tie beams 21 strengtheningly connect locations close to the apex of the coupling member or trestle 20 to widely spaced apart locations at the top and rear of the hollow frame portion 1.

In the use of the soil cultivating implement that has been described with reference to Figures 1 to 3 of the drawings, the coupling member or trestle 20 is employed to connect the implement to the three-point lifting device or hitch at the rear of an agricultural tractor or other operating vehicle and the known telescopic transmission shaft 19, having universal joints at its opposite ends, is employed to place the rotary input shaft of the gearbox 17 in driven connection with the rear power take-off shaft of the same tractor or other vehicle. Adjustments that may need to be made, before the implement commences work, include establishing an appropriate transmission ratio in the change-speed gear 18 and setting the maximum working depth of the tines 5 of the soil working members 3 to an appropriate value by displacement, if required, of the supporting member 10. Figure 2 of the drawings shows the supporting member 10 positioned for maximum working depth of the tines 5 which maximum working depth may have a value of substantially 20 cm. The minimum working depth, established by using the uppermost hole 14 in each carrier plate 12 for co-operation with the corresponding locking pins 15, establishes a working depth of substantially 5 cm whereas employment of the central hole 14 in each carrier plate 12 will establish a working depth substantially midway between the maximum and minimum values just mentioned. The adjustments which have been discussed will, of course, be made primarily having regard to the nature and condition of the soil that is to be worked and the particular purpose of the harrowing/cultivating operation.

When operating with the supporting member 10 of the implement adjusted as shown best in Figure 2 of the drawings, the supporting portion of the member 10 is the lowermost substantially horizontally disposed part of its plate 11 that lies between the first and second fold lines in the plate 11 considering the rearmost fold line, with respect to the direction A, to be the "first" fold line in said plate. The torque that is established by the drag of this supporting part of the member 10 over the ground surface turns the whole member 10 in an anti-clockwise direction about the axis *a*, as seen in Figure 2, and thus maintains the lowermost edge of the lowermost recess 13 firmly against the lower surface of the leading rim of the hollow frame portion 1, thus reliably and automatically maintaining the optimum supporting position of the member 10. The same would, of course, be true for an alternative one of the recesses 13 in each carrier plate 12 if one of the other two possible positions of the supporting member 10 were adopted. If a large stone or other hard object should get between at least one of the soil working members 3 and the rear of the elongate plate 11, or the lower rear edge of one of the carrier plates 12, the whole supporting member 10 can deflect forwardly in a clockwise direction, as seen in Figure 2, about the axis *a* until the hard object is released without causing any damage. The lower and leading edges of the recesses 13 in question in each carrier plate 12 act as guides whereas the uppermost inclined edges of said recesses 13 act as stops and limit the deflecting displacement about the axis *a* which is possible. The arrangement is such that the inclined upper edges of the recesses 13 in question move downwardly into contact with the upper surfaces of the leading fastening plates 9 which then prevent further displacement. It is preferred that a maximum displacement of substantially 15° about the axis *a* should be possible. The fact that the substantially horizontal axis *a* is in advance, with respect to the direction A, of the supporting part of the member 10 ensures that said member 10 reliably maintains a stable supporting position during use of the implement and that, should it be deflected in the manner that has just been described, it will automatically and rapidly return to its appointed operating position once the stone or other hard object that caused displacement has been removed by rotation of the members 3.

Due to the provision of the single shaped elongate plate 11, the supporting member 10 that has been described, and that is illustrated in Figures 1 to 3 of the drawings, can be manufactured in a simple manner and can have a relatively low weight, the five fold lines therein considerably enhancing the rigidity of said plate so that it does not need auxiliary strengthening means. The relatively light weight of the supporting member 10 enables it quickly and easily to be manually adjusted to an alternative position in the manner described above. The whole implement is simple and compact and can be arranged, as shown in Figure 1, closely behind an operating agricultural tractor or other vehicle so that, if required, said implement can be used in combination with a seed drill, planting machine or other implement without the other elements of the combination being too far behind the tractor or other operating vehicle and thus exerting a dangerously high load upon the rear lifting device or hitch of the tractor or operating vehicle.

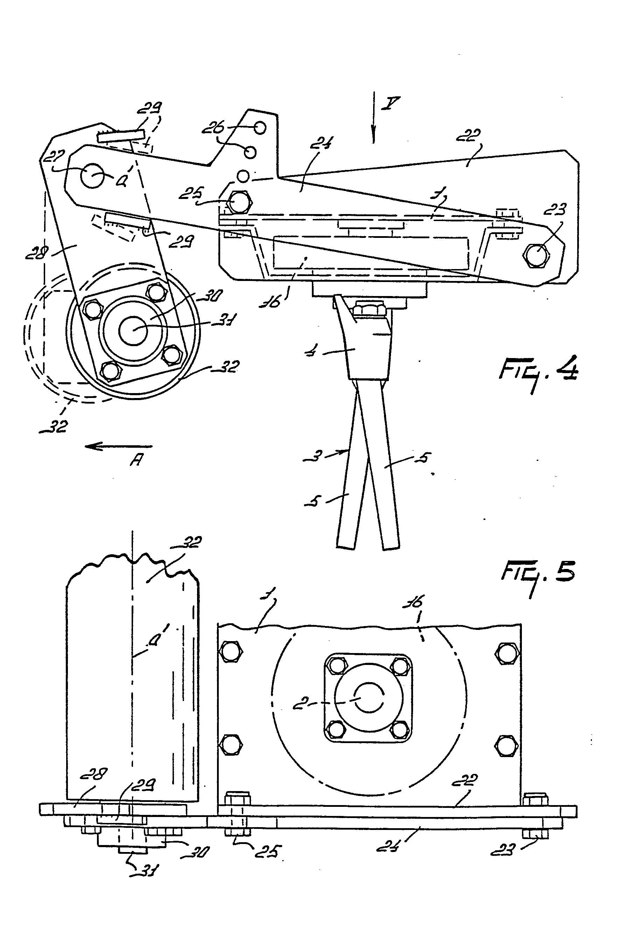

Figures 4 and 5 of the drawings illustrate an alternative embodiment in which, however, parts that are similar, or identical, to the embodiment of Figures 1 to 3 are indicated by the same reference numerals as are employed in those Figures and will not be described in detail again. In the embodiment of Figures 4 and 5 of the drawings, the opposite ends of the hollow box-section frame portion 1 are closed by side plates 22 that are substantially vertically parallel to each other and to the direction A. Each side plate 22 has a larger size than the cross-sectional area of the hollow frame portion 1 and, in particular, has a larger vertical extent at its rear, with respect to the direction A, than it does at its front, each side plate 22 projecting rearwardly behind the hollow frame portion 1 by a significant distance. It will be appreciated that Figures 4 and 5 of the drawings show the construction at one end of the hollow frame portion 1 and that the construction at the opposite end thereof is substantially symmetrically identical. A lower region of that portion of the illustrated side plate 22 which projects behind the hollow frame portion 1 has the rearmost end of a corresponding arm 24 turnably connected to it by a pivot bolt 23 which defines an axis that is substantially horizontally parallel to the transverse length of the hollow frame portion 1. The arm 24 is thus turnable upwardly and downwardly immediately alongside the outer surface of the illustrated side plate 22 and can be retained in a chosen angular setting about the pivot bolt 23 by entering a horizontal retaining bolt 25 through a chosen one of a number, such as four, of holes 26 which are formed in the arm 24 (some in an upward extension of that arm) with each of the substantially regularly spaced apart holes 26 at the same distance from the axis which is defined by the corresponding pivot bolt 23. A hole is formed through the upper leading corner of the adjoining frame portion side plate 22 at the same distance from the pivotal axis defined by the bolt 23 and, by entering the retaining bolt 25 through this hole and through a chosen one of the holes 26, the arm 24 concerned is reliably, but releasably, retained in a chosen angular setting about said axis.

The two arms 24 both extend generally forwardly from their pivot bolts 23 alongside the corresponding plates 22 and project forwardly beyond the leading ends of those side plates 22 by a significant distance. Each arm 24 is provided, adjacent to its leading end, with a fixedly mounted pivot pin 27 defining a substantially horizontal axis $a'$ that is parallel or substantially parallel to the axis defined by the two pivot bolts 23 and to the transverse length of the hollow frame portion 1. The upper end of a corresponding carrier plate 28 is turnable about the axis $a'$ defined by each pivot pin 27 relative to the corresponding arm 24, each carrier plate 28 being provided above and below the upper and lower edges of the arm 24 concerned with corresponding stop plates 29 that limit the angular displacement of each carrier plate 28 which is possible relative to the associated arm 24 to an angle that it is preferred should not exceed substantially 15°. Each end of the angular displacement that is possible is defined by the corresponding stop plate 29 coming into abutting engagement with either the upper or the lower edge of the corresponding arm 24.

A lower end region of each carrier plate 28 has a corresponding substantially horizontal bearing 30 releasably bolted to it, the two substantially aligned bearings 30 being arranged to receive substantially horizontal stub shafts axially mounted at the opposite ends of a freely rotatable roller 32 which, together with the two carrier plates 28, affords the supporting member of the implement. The roller 32 of the supporting member extends throughout the combined working width of the soil working members 3 and, as in the preceding embodiment, can be displaced upwardly or downwardly relative to the frame portion 1 and soil working members 3 to govern the maximum working depth of the tines 5 that is possible. In this case, each arm 24 has four of the holes 26, Figure 4 of the drawings showing a setting in which the tines 5 will be able to penetrate into the soil to a maximum working depth of substantially 20 cm. The minimum working depth which corresponds to the use of the uppermost hole 26 in each arm 24 is substantially 5 cm and the intervening holes 26 correspond to working depths of substantially 10 cm, and substantially 15 cm, respectively. Figure 4 of the drawings illustrates the normal optimum working position of the supporting member 28/32 in full lines and also illustrates, in broken lines, a deflected position of said supporting member in the event of a large stone or other hard object becoming jammed between the roller 32 and/or one of the carrier plates 28 and at least one of the soil working members 3. The forward deflection that is possible is limited by the upper stop plate 29 on each carrier plate 28 and the normal optimum supporting position is governed by abutment of the two lower stop plates 29 against the lower edges of the corresponding arms 24. In this case, it is the lowermost extremity, at any instant, of the roller 32 which is the part of the supporting member that actually makes supported contact with the soil and it will be seen that, in the full line position of the supporting member that is illustrated in Figure 4, the axis a' is in advance of this part of the roller 32 with respect to the direction A. The resistance offered by the ground surface to progress in the direction A of the roller 32 reliably maintains the supporting member 28/32 in the full line position illustrated in Figure 4 and immediately restores that position after a deflection of the supporting member about the axis a' in response to displacement by a stone or the like becoming momentarily caught between the supporting member and at least one of the soil working members 3.

The use of the supporting member 28/32 that has been described with reference to Figures 4 and 5 of the drawings again, as in the case of the first embodiment, provides a simple but effective control of the maximum depth into the ground to which the tines 5 of the soil working member 3 can penetrate, the construction being particularly simple and compact without losing any effectiveness. Both the supporting member 10 and the supporting member 28/32 are effective in pressing, or at least guiding, any stone or other hard object that may be encountered thereby, during the operation of the implement, downwardly into, or at least onto, the ground surface.

## Claims

1. A soil cultivating implement comprising an elongate frame portion (1) that is movable over the ground and that extends horizontally or substantially horizontally perpendicular or at least transverse to the intended direction of operative travel (A) of the implement, the frame portion (1) carrying a plurality of rotary soil working members (3) that are rotatable about upwardly extending axes and each of which has at least one soil working tool (5), a single supporting member (10, 28, 32) being provided which supports the implement from the ground surface, when it is in operation, at a position in advance of the rotary soil working members (3) relative to said direction of travel (A), the said member being pivotable about an horizontal and transverse axis (a, a'), which is located eccentrically and above the whole part of the supporting member that bears upon the ground surface, being also upwardly and downwardly adjustable in level relative to that of the soil working members (3) and abutting normally against a first stop, which limits its rearward displacement, characterized in that the supporting member (10, 28, 32) is freely pivotable about its axis (a, a') which is located in advance, with respect to the intended direction of operative travel (A) of the implement, of the whole part of the supporting member (10, 28, 32) that bears upon the ground surface when the implement is in use and a further stop (13, 29) is provided that limits the angular extent of the forward deflection of the supporting member (10, 28, 32), when said supporting member encounters an obstacle, providing, once the obstacle is passed, an automatic return of the supporting member against the first stop, due to the continuing forward travel of the implement.

2. An implement according to claim 1, characterized in that the said stops (13, 28) are provided on a carrier (12, 28) of the supporting member (10, 28, 32).

3. An implement according to claim 1 or 2, characterised in that the supporting member (10) comprises a shaped plate (11) whose leading surface, with respect to the intended direction of operative travel (A) of the implement, is convex.

4. An implement according to any preceding claim, characterised in that the pivotal axis (a, a') is located at a higher horizontal level than the top of said frame portion (1).

5. An implement according to any preceding claim, characterised in that the pivotal axis (a) is defined by the longitudinal axes of locking pins (15) by which the level of the supporting member (10) relative to that of the soil working members (3) is adjustable.

6. An implement according to claim 5 when read as appendant to claim 2 and either claim 3 or claim 4, characterised in that the stops (13) are provided at substantially the same horizontal level as the locking pins (15).

7. An implement according to claim 6, characterised in that each stop is afforded by at least one edge of a recess (13) located along a rear portion of a carrier (12) of the supporting member (10).

8. An implement according to claim 7, characterised in that, when the implement is in operation, one edge of said recess (13) co-operates with a leading rim of said frame portion (1).

9. An implement according to claim 7 or claim 8, characterised in that each recess (13) has an upper edge that is inclined upwardly and rearwardly, with respect to the intended direction of operative travel (A) of the implement, from its leading lowermost end.

10. An implement according to any one of claims 7 to 9, characterised in that each carrier (12) is formed with three holes (14) that are located one above the other and that are arranged for co-operation with the locking pins (15) in determining the level of the supporting member (10) relative to that of said soil working members (3), said holes (14) being respectively located at levels immediately above those of the corresponding recesses (13).

11. An implement according to claim 3 or to any one of claims 4 to 10 when read as appendant to claim 3, characterised in that the shaped plate (11) comprises a plurality of spaced and substantially parallel fold lines that all extend substantially horizontally perpendicular, or at least transverse, to the intended direction of operative travel (A) of the implement.

12. An implement according to claim 11, characterised in that said fold lines are so arranged that the shaped plate (11) comprises three parts of equal or substantially equal width, that one of said parts which is rearmost with respect to the intended direction of operative travel (A) of the implement being horizontally or substantially horizontally disposed when the supporting member (10) of the implement is in its normal supporting position and said part principally affording the part of the supporting member (10) which is directly supported by the ground surface when the implement is in operation.

13. An implement according to claim 11 or 12, characterised in that the parts of the shaped plate (11) which lie between said fold lines afford chords of an imaginary circle and subtend an angle of substantially 60° at the centre (P) of that imaginary circle.

14. An implement according to claim 1 or 2, characterised in that the supporting member (28, 32) comprises a roller (32).

15. An implement according to claim 14, characterised in that the roller (32) is rotatably supported at locations adjacent to its opposite ends by carriers (28) which are arranged at the leading ends, with respect to the intended direction of operative travel (A) of the implement, of arms (24) so as to be pivotable to a limited angular extent relative to those arms (24), said arms (24) being upwardly and downwardly adjustable in position with respect to the frame portion (1) and the soil working members (3).

16. An implement according to claim 15, characterised in that the carriers (28) are provided with stops (29) which respectively co-operate with upper and lower edges of the corresponding arms (24) in such a way as to define the opposite ends of the angular displacement of the carriers (28) that is possible.

17. An implement according to any preceding claim, characterised in that the maximum angular extent of the pivotal displacement of the supporting member (10, 28/32) that is possible is limited to substantially 15°.

18. An implement according to claim 15 or claim 16 or to claim 17 when read as appendant to either claim 15 or claim 16, characterised in that the arms (24) are pivotally supported (23) at locations adjacent the rear, with respect to the intended direction of operative travel (A) of the implement, of said frame portion (1) and are provided with means (25, 26) located adjacent the front of said frame portion (1) to enable the arms (24) to be releasably retained in chosen ones of a plurality of different angular settings about their pivotal mountings (23) relative to the frame portion (1).

19. An implement according to any preceding claim, characterised in that the maximum working depth of the soil working tools (5) of the implement can be set by appropriate adjustment of the supporting member (10, 28/32) to a value between substantially 5 cm and substantially 20 cm, inclusive.

**Patentansprüche**

1. Bodenbearbeitungsmaschine mit einem langgestreckten Gestellteil (1), das über den Boden bewegbar ist, und das sich horizontal oder etwa horizontal senkrecht oder zumindest quer zur vorgesehenen Arbeitsfahrtrichtung (A) der Maschine erstreckt, und das eine Anzahl von drehbaren Bodenbearbeitungsteilen (3) trägt, die um aufwärts gerichtete Achsen antreibbar sind und jeweils mindestens ein Bodenbearbeitungswerkzeug (5) aufweisen und mit einem einzigen Stützteil (10, 28, 32), das die Maschine während des Betriebes auf der Bodenoberfläche abstützt und das in bezug auf die Fahrtrichtung (A) in einer Stellung vor den drehbaren Bodenbearbeitungsteilen (3) angeordnet ist, wobei das Stützteil um eine horizontale und quer verlaufende Achse (a, a') drehbar ist, die außermittig und über dem Teil des Stützteiles angeordnet ist, der auf der Bodenoberfläche aufliegt und in bezug auf die Bodenbearbeitungsteile (3) nach oben und unten höhenverstellbar ist und normalerweise an einem ersten Anschlag anliegt, der die Bewegung des Stützteiles nach hinten begrenzt, dadurch gekennzeichnet, daß das Stützteil (10, 28, 32) um seine Achse (a, a') frei drehbar ist, die in bezug auf die vorgesehene Arbeitsfahrtrichtung (A) der Maschine vor dem Teil des Stützteiles (10, 28, 32) angeordnet ist, der im Betrieb auf der Bodenoberfläche aufliegt, und daß ein weiterer Anschlag (13, 29) vorgesehen ist, der den Ausschlagwinkel des Stützteiles (10, 28, 32) nach vorne begrenzt, wenn das Stützteil auf ein Hindernis auftrifft, wobei das Stützteil nach dem Passieren des Hindernisses durch die Fortsetzung der Vorwärtsfahrt der Maschine automatisch gegen den ersten Anschlag zurückgeführt wird.

2. Maschine nach Anspruch 1, dadurch gekennzeichnet, daß die Anschläge (13, 29) an einem Träger (12, 28) des Stützteiles (10, 28, 32) vorgesehen sind.

3. Maschine nach Anspruch 1 oder 2, dadurch gekennzeichnet, daß das Stützteil (10) eine profilierte Platte (11) aufweist, deren Führungsfläche in bezug auf die vorgesehene Arbeitsfahrtrichtung (A) der Maschine konvex ausgebildet ist.

4. Maschine nach einem der Ansprüche 1 bis 3, dadurch gekennzeichnet, dadurch gekennzeichnet, daß die Drehachse (a, a') höher als die Oberseite des Gestellteiles (1) angeordnet ist.

5. Maschine nach einem der Ansprüche 1 bis 4, dadurch gekennzeichnet, daß die Drehachse (a) durch die Längsachsen der Verriegelungsbolzen (15) bestimmt ist, durch die die Höhe des Stützteiles (10) relativ zur Höhe der Bodenbearbeitungsteile (3) einstellbar ist.

6. Maschine nach Anspruch 5 sofern rückbezogen auf Anspruch 2 und Anspruch 3 oder Anspruch 4, dadurch gekennzeichnet, daß die Anschläge (13) in etwa gleicher horizontaler Höhe wie die Verriegelungsbolzen (15) vorgesehen sind.

7. Maschine nach Anspruch 6, dadurch gekennzeichnet, daß jeder Anschlag durch mindestens eine Kante einer Ausnehmung (13) gebildet ist, die längs des hinteren Teils eines Trägers (12) des Stützteiles (10) angeordnet ist.

8. Maschine nach Anspruch 7, dadurch gekennzeichnet, daß beim Betrieb der Maschine eine Kante der Ausnehmung (13) mit einem Führungsrand des Gestellteiles (1) zusammenwirkt.

9. Maschine nach Anspruch 7 oder 8, dadurch gekennzeichnet, daß jede Ausnehmung (13) eine obere Kante aufweist, die in bezug auf die vorgesehene Arbeitsfahrtrichtung (A) der Maschine von ihrem untersten Führungsende nach oben und hinten schräggestellt ist.

10. Maschine nach einem der Ansprüche 7 bis 9, dadurch gekennzeichnet, daß jeder Träger (12) drei Ausschnitte (14) aufweist, die übereinander angeordnet sind, und die zum Zusammenwirken mit den Verriegelungsbolzen (15) angeordnet sind, um die Höhe des Stützteiles (10) in bezug auf die Bearbeitungsteile (3) zu begrenzen, und daß die Ausschnitte (14) in einer Höhe direkt oberhalb der zugehörigen Ausnehmungen (13) angeordnet sind.

11. Maschine nach Anspruch 3 oder einem der Ansprüche 4 bis 10 sofern rückbezogen auf Anspruch 3, dadurch gekennzeichnet, daß die profilierte Platte (11) mehrere mit Abstand voneinander angeordnete und etwa parallele Faltlinien aufweist, die sich alle etwa horizontal senkrecht oder zumindest quer zur vorgesehenen Arbeitsfahrtrichtung (A) der Maschine erstrecken.

12. Maschine nach Anspruch 11, dadurch gekennzeichnet, daß die Faltlinien so angeordnet sind, daß die profilierte Platte (11) drei Teile gleicher oder etwa gleicher Breite aufweist, von denen der in bezug auf die vorgesehene Arbeitsfahrtrichtung (A) der Maschine hinterste Teil horizontal oder etwa horizontal angeordnet ist, wenn das Stützteil (10) der Maschine in seiner normalten Stützstellung ist und dieser Teil hauptsächlich den Teil des Stützteiles (10) bildet, der sich beim Betrieb der Maschine direkt auf der Bodenoberfläche abstützt.

13. Maschine nach Anspruch 11 oder 12, dadurch gekennzeichnet, daß die Teile der profilierten Platte (11), die zwischen den Faltlinien liegen, Sehnen eines imaginären Kreises bilden und einen Winkel von etwa 60° um den Mittelpunkt (P) des imaginären Kreises umspannen.

14. Maschine nach Anspruch 1 oder 2, dadurch gekennzeichnet, daß das Stützteil (28, 32) eine Walze (32) aufweist.

15. Maschine nach Anspruch 14, dadurch gekennzeichnet, daß die Walze (32) nahe ihren entgegengesetzten Enden drehbar an Trägern (28) gelagert ist, die in bezug auf die vorgesehene Arbeitsfahrtrichtung (A) der Maschine an den Führungsenden von Armen (24) angebracht sind, so daß sie in einem begrenzten Winkelbereich in bezug auf diese Arme (24) drehbar sind, wobei die Arme (24) in ihrer Stellung zum Gestellteil (1) und den Bodenbearbeitungsteilen (3) nach oben und unten verstellbar sind.

16. Maschine nach Anspruch 15, dadurch gekennzeichnet, daß die Träger (28) mit Anschlägen (29) versehen sind, die mit den oberen und unten Kanten der entsprechenden Arme (24) zusammenwirken, um die mögliche Bewegungsbahn der Träger (28) an entgegengesetzten Enden zu begrenzen.

17. Maschine nach einem der Ansprüche 1 bis 16, dadurch gekennzeichnet, daß der größte Winkel, um den die Drehbewegung des Stützteiles (10, 28/32) möglich ist, auf etwa 15° begrenzt ist.

18. Maschine nach Anspruch 15 oder Anspruch 16 oder Anspruch 17, sofern rückbezogen auf Anspruch 15 oder 16, dadurch gekennzeichnet, daß die Arme (24) drehbar an Stellen gelagert sind, die in bezug auf die vorgesehene Arbeitsfahrtrichtung (A) der Maschine nahe der Rückseite des Gestellteiles (1) angeordnet sind, und daß die Arme (24) mit Mitteln (25, 26) versehen sind, die nahe der Vorderseite des Gestellteiles (1) angeordnet sind, um zu ermöglichen, daß die Arme (24) wieder lösbar in einer von mehreren unterschiedlichen Winkelstellungen um ihre Drehbefestigungen (23) in bezug auf das Gestellteil (1) gehalten sind.

19. Maschine nach einem der Ansprüche 1 bis 18, dadurch gekennzeichnet, daß die maximale Arbeitstiefe der Bodenbearbeitungswerkzeuge (5) der Maschine durch entsprechendes Verstellen des Stützteiles (10, 28/32) im Bereich zwischen etwa 5 cm und 20 cm verstellbar ist.

**Revendications**

1. Machine pour la culture du sol, comprenant un chassis allongé (1) mobile au dessus du sol et s'étendant horizontalement ou sensiblement horizontalement perpendiculairement ou tout au moins transversalement au sens de marche (A) prévu pour le travail de la machine, le chassis (1) portant une pluralité d'organes rotatifs (3) de travail du sol pouvant tourner sur des axes s'étendant vers le haut, chacun de ces organes ayant au moins un outil (5) de travail du sol, un unique organe de support (10, 28, 32) étant prévu, qui soutient la machine à partir de la surface du sol quand elle est en service, en une position en avant des organes rotatifs (3) de travail du sol par rapport audit sens de marche (A), ledit organe pouvant pivoter sur un axe horizontal et transversal (a, a') qui est situé excentriquement et au dessus de toute la partie de l'organe de support qui repose sur la surface du sol, étant aussi ajustable en niveau vers le haut et vers le bas par rapport à celui des organes (3) de travail du sol, et butant normalement contre une première butée qui limite le déplacement vers l'arrière, caractérisée en ce que l'organe de support (10, 28, 32) peut pivoter librement sur son axe (a, a') qui est situé en avant, par rapport au sens de marche (A) prévu pour le fonctionnement de la machine, de toute la partie de l'organe de support (10, 28, 32) qui repose sur la surface du sol lorsque la machine est en service et en ce qu'une autre butée (13, 29) est prévue qui limite le débattement angulaire vers l'avant de l'organe de support (10, 28, 32) lorsque ledit organe de support rencontre un obstacle, en prévoyant, une fois l'obstacle franchi, un retour automatique de l'organe de support contre la première butée, dû à la marche continuante d'avance de la machine.

2. Machine selon la revendication 1, caractérisée en ce que lesdites butées (13, 29) sont prévues sur un organe porteur (12, 28) de l'organe de support (10, 28, 32).

3. Machine selon la revendication 1 ou 2, caractérisée en ce que l'organe de soutien (10) comprend une plaque profilée (11) dont la surface antérieure, par rapport à la direction de marche (A) prévue pour le travail de la machine, est convexe.

4. Machine selon n'importe laquelle des revendications précédentes, caractérisée en ce que l'axe de pivotement (a, a') est situé à un niveau horizontal plus haut que le sommet dudit chassis (1).

5. Machine selon n'importe laquelle des revendications précédentes, caractérisée en ce que l'axe de pivotement (a) est défini par les axes longitudinaux de clavettes de verrouillage (15) au moyen desquelles est réglable le niveau de l'organe de soutien (10) par rapport à celui des organes (3) de travail du sol.

6. Machine selon la revendication 5 lue en dépendance de la revendication 2 et de l'une ou l'autre des revendications 3 ou 4, caractérisée en ce que les butées (13) sont prévues sensiblement au même niveau horizontal que les clavettes de verrouillage (15).

7. Machine selon la revendication 6, caractérisée en ce que chaque butée est constituée par au moins un bord d'une encoche (13) située le long d'une partie arrière d'un élément porteur (12) de l'organe de soutien (10).

8. Machine selon la revendication 7, caractérisée en ce que lorsque la machine est en fonctionnement, un bord de ladite encoche (13) coopère avec un bord antérieur dudit chassis (1).

9. Machine selon la revendication 7 ou la revendication 8, caractérisée en ce que chaque encoche (13) a un bord supérieur qui est incliné vers le haut et vers l'arrière, par rapport à la direction de marche (A) prévue pour le travail de la machine, à partir de son extrémité antérieure la plus basse.

10. Machine selon l'une quelconque des revendications 7 à 9, caractérisée en ce que chaque élément porteur (12) est formé avec trois trous (14) qui sont situés l'un au dessus de l'autre et qui sont arrangés pour coopérer avec les clavettes de verrouillage (15) en déterminant le niveau de l'organe de soutien (10) par rapport à celui desdits organes (3) de travail du sol, lesdits trous (14) étant respectivement situés à des niveaux immédiatement au dessus de ceux des encoches (13) correspondantes.

11. Machine selon la revendication 3 ou n'importe laquelle des revendications 4 à 10 lues en dépendance de la revendication 3, caractérisée en ce que la plaque profilée (11) comprend une pluralité de lignes de pliure espacées et sensiblement parallèles qui s'étendent toutes sensiblement horizontalement perpendiculairement ou tout au moins transversalement à la direction de marche (A) prévue pour le fonctionnement de la machine.

12. Machine selon la revendication 11, caractérisée en ce que lesdites lignes de pliure sont arrangées de telle sorte que la plaque profilée (11) comprenne trois parties de largeur égale ou sensiblement égale, que l'une de ces parties qui est le plus en arrière par rapport à la direction de marche (A) prévue pour le fonctionnement de la machine étant disposée horizontalement ou sensiblement horizontalement lorsque l'organe de soutien (10) de la machine est dans sa position normale de soutien, et ladite partie constituant principalement la partie de l'organe de soutien (10) qui repose directement à la surface du sol lorsque la machine est en fonctionnement.

13. Machine selon la revendication 11 ou 12, caractérisée en ce que les parties de la plaque profilée (11) qui se trouvent entre lesdites plis constituent les cordes d'un cercle imaginaire et sous-tendent un angle d'approximativement 60° au centre (P) de ce cercle imaginaire.

14. Machine selon la revendication 1 ou 2, caractérisée en ce que l'organe de soutien (28, 32) comprend un rouleau (32).

15. Machine selon la revendication 14, caractérisée en ce que le rouleau (32) est soutenu rotativement en des endroits adjacents à ses extrémités opposées par des organes porteurs (28) qui sont disposés aux extrémités antérieures, par rapport au sens de marche (A) prévu pour le fonctionnement de la machine, de bras (24) de manière à pouvoir pivoter dans une mesure angulaire limitée par rapport à ces bras (24), lesdits bras (24) étant réglables en position vers le haut et vers le bas par rapport au chassis (1) et aux organes (3) de travail du sol.

16. Machine selon la revendication 15, caractérisée en ce que les éléments porteurs (28) sont munis de butées (29) qui coopèrent respectivement avec les bords supérieurs et inférieurs des bras (24) correspondants, de manière à définir les extrémités opposées du déplacement angulaire possible des éléments porteurs (28).

17. Machine selon n'importe laquelle des revendications précédentes, caractérisée en ce que le débattement angulaire maximum de l'organe de soutien (10, 28, 32) est limité à substantiellement 15°.

18. Machine selon la revendication 15 ou la revendication 16, ou selon la revendication 17 lue en dépendance de l'une ou l'autre des revendications 15 ou 16, caractérisée en ce que les bras (24) sont soutenus de manière pivotante (23) en des emplacements adjacents à l'arrière, par rapport au sens de marche (A) prévu pour le fonctionnement de la machine, dudit chassis (1) et qu'ils sont munis de moyens (25, 26) situés en position adjacente à l'avant dudit chassis (1) pour permettre aux bras (24) d'être retenus de manière libérable en des réglages angulaires choisis parmi une pluralité de tels réglages autour de leurs montures à pivots (23) par rapport au chassis (1).

19. Machine selon n'importe laquelle des revendications précédentes, caractérisée en ce que la profondeur maximale de travail des organes (5) de travail du sol de la machine peut être réglée par un réglage approprié de l'organe de soutien (10, 28/32) à une valeur comprise entre substantiellement 5 cm et substantiellement 20 cm, inclusivement.

FIG. 1

0 079 662

0 079 662

FIG. 2

FIG. 3

2

FIG. 4

FIG. 5